(19)

**Europäisches Patentamt**
**European Patent Office**
**Office européen des brevets**

(11) **EP 4 503 844 A2**

(12) **EUROPEAN PATENT APPLICATION**

(43) Date of publication:
**05.02.2025 Bulletin 2025/06**

(21) Application number: **24199410.2**

(22) Date of filing: **21.05.2019**

(51) International Patent Classification (IPC):
**H04W 84/12** (2009.01)

(52) Cooperative Patent Classification (CPC):
**H04W 74/0816; H04W 84/12**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**19726367.6 / 3 942 889**

(71) Applicant: **Huawei Technologies Co., Ltd.**
**Shenzhen, Guangdong 518129 (CN)**

(72) Inventors:
• **WEITZMAN, Avi**
  **80992 Munich (DE)**
• **EZRI, Doron**
  **80992 Munich (DE)**
• **HENCINSKI, Oren**
  **80992 Munich (DE)**

• **JIANG, Xingfeng**
  **80992 Munich (DE)**
• **PATURY, Shahar**
  **80992 Munich (DE)**

(74) Representative: **Roth, Sebastian**
**Mitscherlich PartmbB**
**Patent- und Rechtsanwälte**
**Karlstraße 7**
**80333 München (DE)**

Remarks:
•This application was filed on 10.09.2024 as a
divisional application to the application mentioned
under INID code 62.
•Claims filed after the date of filing of the application /
after the date of receipt of the divisional application
(Rule 68(4) EPC).

(54) **DEVICES, SYSTEM AND METHODS FOR SHARING A MEDIUM OF A WIRELESS NETWORK**

(57)    The invention aims to increase the efficiency of the spatial reuse method in systems that allow multiple devices to use the same medium of a wireless network (in the same space, time and frequency). Accordingly, a system comprising a plurality of devices for a wireless network is provided. Each of the plurality of devices in the system is configured to: share an own potential transmission duration with the other devices, and perform an access method to gain direct access to a medium of the wireless network, in particular perform a CSMA/CA method, wherein the device gaining direct access to the medium is configured to: determine an shared transmission duration based on all the potential transmission durations, and publish the shared transmission duration to the other devices.

EP 4 503 844 A2

**Description**

**TECHNICAL FIELD**

The present invention relates to a wireless network access method, in particular, to a spatial reuse method in the wireless network. The invention thus aims to allow multiple devices to use the same medium (e.g. in the same time and/or frequency) with the goal of increasing an efficiency of the spatial reuse method.

**BACKGROUND**

IEEE 802. 11 -based wireless local area network (WLAN) becomes popular at an unprecedented rate. The IEEE 802.11 standard defines two access methods, namely Distributed Coordination Function (DCF) and Point Coordination Function (PCF). Most access points (APs) use only the DCF, and the PCF is excluded in IEEE 802.11-2016.

The DCF uses a carrier-sense multiple access with collision avoidance (CSMA/CA) algorithm, which is a simple access algorithm that was one of the main contributions to the huge success of Wireless Fidelity (Wi-Fi). 802.11e introduces enhanced distributed channel access (EDCA) that adds a statistical prioritization between devices to a distributed channel access (DCA).

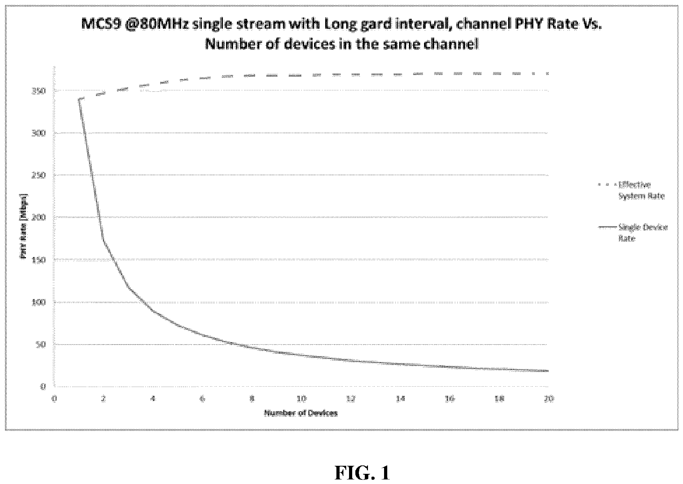

The CSMA/CA implements time-sharing of the medium (in time and space) i.e., as one device is active and all other are in idle mode. As shown in FIG. 1, by sharing the medium a total channel performance in a high density (HD) / very high density (VHD) deployment stays about the same, although the number of APs increases. Because the number of APs increases, the performance of each device is reduced accordingly, i.e., to the channel capacity divided by the number of devices connected.

802.11ax introduces a spatial reuse feature that allows multiple devices to use the same medium (in the same time and frequency). Furthermore, coloring enables devices to differentiate transmissions in their own network from transmissions in neighboring networks.

Adaptive power and sensitivity thresholds allow dynamically adjusting transmit power and signal detection threshold to increase spatial reuse by reducing the interference between medium sharing devices. However, each AP still needs to perform the EDCA procedure (BO count) with new clear channel assessment (CCA). In the spatial reuse method, all transmissions need to end at the same time. Consequently, all devices that want to participate in a session, must align their transmit (Tx) time to the Tx time of a first device.

In case that a Tx duration of the first device is small, a potential gain is reduced as the overhead of the other devices will be relatively high. Notably, in short data scenarios, there may even be negative gain, as no other device will reuse the medium.

Other solutions are proposed. In one solution, only devices with long Tx durations are allowed to initiate / enable a spatial reuse. This solution reduces the potential gain, as only a few devices access the medium, and the access probability decreases, which decreases the medium usage and the potential gain. Another solution proposes to use the maximum or a very long Tx duration (up to 5.4 ms) for all transmissions (regardless of an actual Tx duration). However, this will dramatically increase the Tx overhead and reduce the potential gain of the spatial reuse as well, due to an idle Tx time.

**SUMMARY**

In view of the above-mentioned disadvantages, embodiments of the present invention aim to improve the conventional approaches, in particular, to increase a spatial reuse efficiency. An objective is thus to optimize a network performance. One aim is to provide an optimal transmission duration for the entire network for reusing a medium of a wireless network.

The objective is achieved by the embodiments provided in the enclosed independent claims. Advantageous implementations of the embodiments of the present invention are further defined in the dependent claims.

A first aspect of the invention provides a device for a wireless network, wherein the device is configured to: share an own potential transmission duration with a plurality of other devices, obtain a potential transmission duration from each of the other devices, and perform an access method to gain direct access to a medium of the wireless network, wherein the device is configured to, if gaining direct access to the medium: determine an shared transmission duration based on all the potential transmission durations, and publish the shared transmission duration.

Thus, potential transmission durations of multiple devices (e.g. APs) in the wireless network can be shared among the devices. In this way, it is possible to find the shared transmission duration, which may be an optimal transmission duration for the entire system. This improves the spatial reuse efficiency in the wireless network, and thus the network performance.

In an implementation form of the first aspect, the access method includes a Carrier-Sense Multiple Access with Collusion Avoidance, CSMA/CA, method.

Particularly, all devices in the same wireless network may use CSMA/CA procedures to access the medium.

In an implementation form of the first aspect, the device is further configured to determine the shared transmission duration based on an average duration of all the potential transmission durations.

The shared transmission duration, for example, the optimal transmission duration, may be determined by the device that gains direct access to the medium. The determination may be performed based on the own potential transmission duration of the device and the potential durations of the other (neighbor) devices. In this implementation form, the average duration of all potential transmission durations is calculated as a simple solution.

In an implementation form of the first aspect, the device is configured to determine the shared transmission duration according to the shorter one of the average duration and a determined maximum duration.

Particularly, if the calculated average duration is shorter than the determined maximum duration, the calculated average duration may be set as the shared transmission duration. If it is not shorter, the determined maximum duration may be set as the shared transmission duration.

In an implementation form of the first aspect, the device is configured to provide medium reuse information to the other devices.

Once the shared transmission duration has been published by the device that gains access to the medium, all other devices in the network may obtain the information to efficiently reuse the medium of the wireless network.

In an implementation form of the first aspect, if the own potential transmission duration is zero, the device is configured to allow the other devices to reuse the medium during the entire shared transmission duration.

In case that the device has no traffic to be transmitted for the time being, the other devices are allowed to reuse the medium during the entire shared transmission duration. This increases the chances of the devices, which share their potential transmission durations with each other, to gain access to the medium.

In an implementation form of the first aspect, if not gaining direct access to the medium, the device is configured to obtain medium reuse information and the shared transmission duration determined by one of the other devices, which has gained direct access to the medium, and reuse the medium based on the reuse information and the shared transmission duration.

Accordingly, if the device is not a device gaining direct access to the medium, i.e. if one of the other devices gains access to the medium, the device may obtain medium reuse information and the shared transmission duration from the other device that gains access to the medium.

In an implementation form of the first aspect, the device is configured to select an own transmission duration based on the own potential transmission duration and the shared transmission duration.

In an implementation form of the first aspect, the device is configured to select the own transmission duration according to the longer one of the own potential transmission duration and the shared transmission duration.

In particular, if the own potential transmission duration of the device is longer than the shared transmission duration, the own potential transmission duration may be set as the own transmission duration. If it is the other way around, the shared transmission duration may be set as the own transmission duration.

In an implementation form of the first aspect, the device is configured to reduce a transmission power and/or a throughput rate for transmitting data, if the shared transmission duration is longer than the own transmission duration. In order to reduce an interference to transmissions of other devices, and to better utilize the (air) medium, all devices with shorter traffic duration may reduce their transmission power, and a physical level data rate of the transmission. In an implementation form of the first aspect, the device is configured to transmit data during the own transmission duration, and transmit NULL data during the remaining time of the shared transmission duration, if the shared transmission duration is longer than the own transmission duration.

For the devices with shorter traffic duration, a data transmission may occupy only a part of the shared transmission duration. The remaining time of the shared transmission duration may be used to transmit NULL data until the end of the transmission.

A second aspect of the present invention provides a system comprising a plurality of devices for a wireless network, wherein each of the plurality of devices is configured to: share an own potential transmission duration with the other devices, and perform an access method to gain direct access to a medium of the wireless network, in particular perform a CSMA/CA method, wherein the device gaining direct access to the medium is configured to: determine an shared transmission duration based on all the potential transmission durations, and publish the shared transmission duration to the other devices.

All devices in the system are aware of their neighboring devices. Potential transmission durations of all the devices are shared with each other, in order to more efficiently reuse the medium. Thus, the system performance is improved. In an implementation form of the second aspect, wherein the devices not gaining direct access to the medium are each configured to: obtain medium reuse information from the device gaining direct access to the medium, and reuse the medium based on the reuse information and the shared transmission duration.

The device, which gains direct access to the medium, shares medium reuse information and the determined shared transmission duration to the other devices. In particular, the other devices are the devices not gaining direct access to the medium.

A third aspect of the present invention provides a method performed by a device for a wireless network, wherein the method comprises: sharing an own potential transmission duration with a plurality of other devices, obtaining a potential transmission duration from each of the other devices, performing an access method to gain direct access to a medium of the wireless network, determining, if gaining direct access to the medium, an shared transmission duration based on all the potential transmission durations, and publishing the shared transmission duration.

The method of the third aspect and its implementation forms provide the same advantages and effects as described above for the wireless transmitting device of the first aspect and its respective implementation forms.

A fourth aspect of the present invention provides a method performed by a system of a plurality of devices for a wireless network, wherein the method comprises: sharing, by each of the devices, an own potential transmission duration with the other devices, performing, by each of the device, an access method to gain direct access to a medium of the wireless network, and determining, by the device gaining direct access to the medium, an shared transmission duration based on all the potential transmission durations, and publishing the shared transmission duration to the other devices.

The method of the fourth aspect and its implementation forms provide the same advantages and effects as described above for the wireless receiving device of the second aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF DRAWINGS

The above described aspects and implementation forms of the present invention will be explained in the following description of specific embodiments in relation to the enclosed drawings, in which

FIG. 1 shows an example of a channel physical rate vs. number of device in the same channel.
FIG. 2 shows a device according to an embodiment of the invention.
FIG. 3 shows an access controller distribution system according to an embodiment of the present invention.
FIG. 4 shows a transmission duration use by devices according to embodiments of the present invention.
FIG. 5 shows a flowchart of a method performed by a device for a wireless network according to an embodiment of the present invention.
FIG. 6 shows a flowchart of a method performed by a system of a plurality of devices for a wireless network according to an embodiment of the present invention.

## DESCRIPTION OF EMBODIMENTS

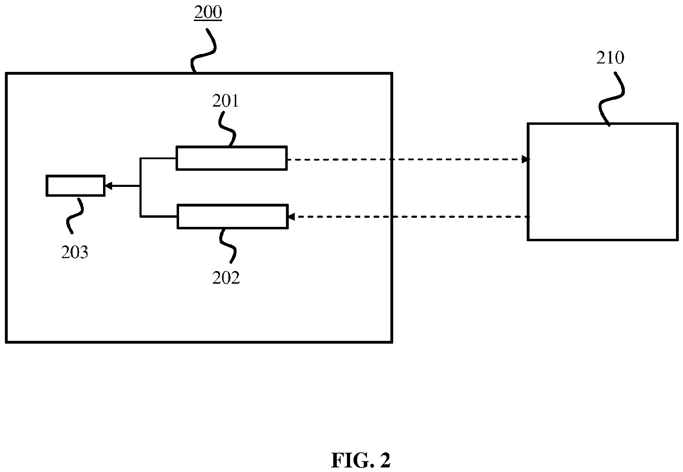

FIG. 2 shows a device 200 according to an embodiment of the invention. The device 200 may comprise processing circuitry (not shown) configured to perform, conduct or initiate the various operations of the device 200 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 200 to perform, conduct or initiate the operations or methods described herein.

The device 200 is configured to share an own potential transmission duration 201 with a plurality of other devices 210 (one of which is illustrated). The device 200 is configured to obtain a potential transmission duration 202 from each of the other devices 210. The device 200 is further configured to perform an access method to gain direct access to a medium of the wireless network. If gaining direct access to the medium, the device 200 is configured to determine a shared transmission duration 203 based on all the potential transmission durations 201 and 202, and publish the shared transmission duration 203.

The device 200 according to an embodiment of the invention may be an AP or access node (AN) in the wireless network. A device 210 may be an AP or AN in the same wireless network. Particularly, the device 200 is aware of its neighbor devices, i.e. of the other devices 210, and shares its own potential transmission duration 201 with all other devices 210. Notably, the other devices 210 are also aware of the device 200, and share their own potential transmission duration 202 with the device 200.

The device 200 and the other devices 210, according to an embodiment of the invention, are allowed to access the medium of the wireless network. In wireless transmission, the medium used may be the air, through electromagnetic, radio and microwave signals. Optionally, the device 200 may access the medium by using a CSMA/CA procedure. The other devices 210 may use CSMA/CA procedures to access the medium as well. The CSMA/CA procedures may all be identical.

Optionally, the device 200 according to an embodiment of the invention is configured to determine the shared transmission duration 203 based on an average duration of all the potential transmission durations 202.

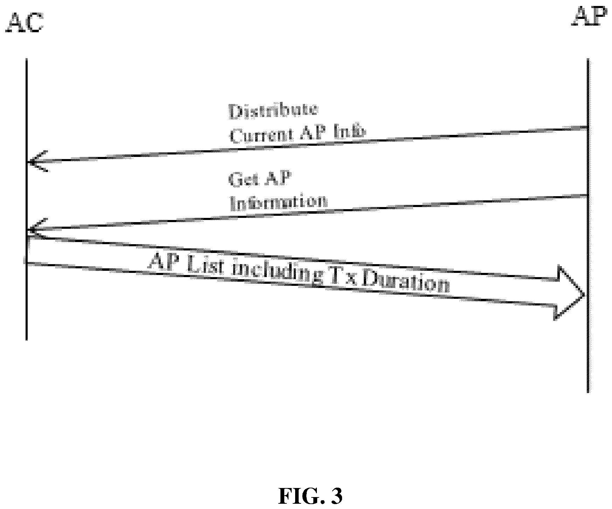

It should be understood that, the potential transmission duration 202 of each AP (including the device 200 and the other devices 210, i.e. exemplarily each being an AP) is a potential transmission duration of the next traffic of each AP. Each AP may publish the potential transmission duration 202 by using an access controller (AC) of the system as shown in FIG. 3. Alternatively, each AP may also share the potential transmission duration 202 by a direct communication between neighboring APs. In particular, each AP may publish its own transmission duration 202 together with any overheads needed to be added to the spatial reuse process.

The device 200, particularly, the device 200 when gaining direct access to the medium, may calculate the average duration of all the potential transmission durations 202 obtained from each of the other devices 210. The shared transmission duration 203 may be determined based on that average duration accordingly.

Optionally, the device 200 according to an embodiment of the invention is configured to determine the shared transmission duration 203 according to the shorter one of the average duration and a determined maximum duration. For example, the determined maximum duration is 2 ms. The shared transmission duration 203 may be calculated by equation (1) as:

$$\text{Shared transmission duration } 203 = \min(\text{average (the potential transmission durations } 202), 2\text{ms})$$

$$(1)$$

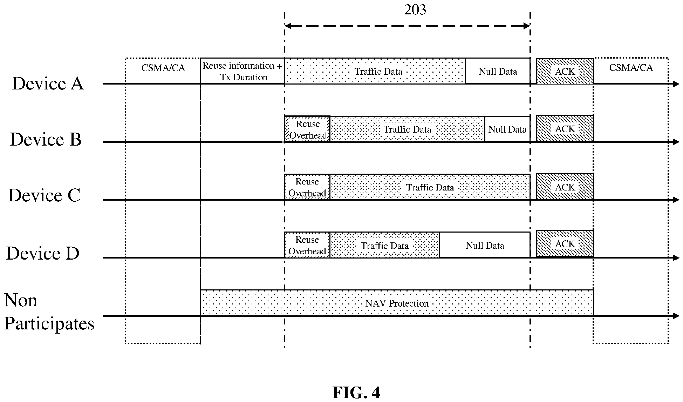

Further, the device 200 according to an embodiment of the invention may be configured to provide medium reuse information to the other devices 210. The device 200 may be an initiator AP of the system. Upon initiating a transmission duration, the device 200 may publish the shared transmission duration 203 and medium reuse information to the entire network system. Each participator AP in the spatial reuse system may align its own transmission duration to the shared transmission duration 203 published by the initiator AP, as shown in FIG. 4.

Optionally, if the own potential transmission duration 202 of the device 200 is zero, the device 200 may allow the other devices 210 to reuse the medium during the entire shared transmission duration 203.

Optionally, in case the device 200 does not gain direct access to the medium, the device 200 may be configured to obtain medium reuse information and the shared transmission duration 203 determined by one of the other devices 210, which has gained direct access to the medium. Then the device 200 may be further configured to reuse the medium based on the reuse information and the shared transmission duration 203.

If the device 200 has no direct access to the medium, that means, one of the other devices 210 has gained direct access to the medium, the other device 210 may determine the shared transmission duration 203, and publish the medium reuse information and the shared transmission duration 203 accordingly.

Optionally, the device 200, according to an embodiment of the present invention, may be configured to select the own transmission duration based on the own potential transmission duration 202 and the shared transmission duration 203. In particular, in an implementation of the present invention, the device 200 is configured to select the own transmission duration according to the longer one of the own potential transmission duration 202 and the shared transmission duration 203. For instance, the own transmission duration of each participator AP is selected by using equation (2) as:

$$\text{Tx Duration} = \max(\text{the own potential transmission duration } 202, \text{ the shared transmission duration } 203)$$

$$(2)$$

A system according to an embodiment of the present invention comprises a plurality of devices for a wireless network. Particularly, the devices included in the system are the device 200 and the other devices 210 shown in FIG. 2. Each of the plurality of devices 200 and 210 is configured to share an own potential transmission duration 201 with the other devices 200 and 210. Each of the plurality of devices 200 and 210 is further configured to perform an access method to gain direct access to a medium of the wireless network, in particular perform a CSMA/CA method. In addition, if a device 200 or 210 gains direct access to the medium, the device 200 or 210 is configured to determine an shared transmission duration 203 based on all the potential transmission durations 202, and publish the shared transmission duration 203 to the other devices 200 and/or 210.

Optionally, if a device 200 or 210 does not gain direct access to the medium, the device 200 or 210 may be configured to obtain medium reuse information from another device 200 or 210 that gains direct access to the medium. And the device 200 or 210 may also configured to reuse the medium based on the reuse information and the shared transmission duration 203.

FIG. 4 shows a transmission duration usage according to an embodiment of the present invention.

Device A shown in FIG.4 is the device 200 that gains direct access to the medium of the wireless network. Accordingly, Device B, C and D are other devices 210 in the same wireless network. "Non Participates" are devices that not participate in the medium reuse process (i.e. are not included in the system 300).

In particular, all Device A - D use CSMA/CA procedures to access the medium as shown in FIG. 4. Device A, that gains direct access to the medium, determines a shared transmission duration 203. Further, medium reuse information and the determined shared transmission duration 203 are published by Device A. A length of each "traffic data" block refers to an own potential transmission duration 202 of each device. All devices with shorter potential transmission duration 202, namely, Device A, B, C and D that participate in the reuse of the medium, may reduce a transmission power and/or a throughput rate for transmitting data. The traffic data may be transmitted through a physic layer. The throughput rate may include a modulation coding scheme (MCS) rate, a CC rate, a dual carrier modulation (DCM) rate, or a guard interval (GI) rate. The transmission power and the throughput rate may be reduced in order to reduce interference, and to better utilize the air medium.

Possibly, one of the participator devices may have no traffic data, in other words, the own potential transmission duration 202 for next traffic of this device may be zero. Then the device without any traffic may capture the medium (using CSMA/CA) and enable the other devices to send data. This increases a network utilization, specifically by prioritizing the device (e.g. AP) traffic.

Upon getting access to the medium, a Tx device may check if reuse of the medium is possible and needed. If no reuse is needed/possible, the Tx device may use its own transmission duration. If reuse is needed/possible, the Tx device may publish an optimal transmission duration, i.e. the shared transmission duration 203, needed for all potential participators in the reuse. According to the reuse method, the published transmission duration should include all overheads.

Notably, all devices, which participate in the medium reuse process, may follow a reuse method guideline (e.g. such as reduce CCA and Tx Power). In addition, all devices may transmit their own data traffics in parallel. As defined by the spatial reuse process, the participator Tx devices will never extend traffic over the protected shared transmission duration published 203 by the first Tx device (in case a new traffic arrived that is not calculated yet). Possibly, the participator Tx devices may adjust their transmit time using an aggregation and fragmentation method, in order to reduce a throughput rate and transmit power, or add NULL data to be transmitted.

Optionally, each Tx device may update a new transmission duration upon each change in Tx buffers. In addition, to avoid "flooding" the network with updates, a timer may be applied that prevents new update before this timer expires.

In this way, a medium reuse efficiency is increased by using a specific designed optimal transmission duration for the entire network, instead of a respective transmission duration for respective device according to needs of the device. Notably, an optimal transmission duration may optimize a network performance.

When working in HD/VHD enterprise environment, a cell size is relatively small Most stations (STAs) are close to the APs and thus keep a high MCS. In a HD/VHD environment, the DCF CSMA/CA process itself is a bottleneck. Specifically, by allowing one device giving access to the medium to several devices, a reuse increases and shortens the overall access time of the entire network.

Even when a STA is in an active traffic, buffers are not always full, and some transmissions will be very short transmissions (High MCS with low traffic). In one example, it is estimated that an amount of short transmission durations to be ~30% of all traffic in the network. By increasing the transmission duration to the optimal duration of the entire network, a method according to an embodiment of the present invention will reduce a need for multiple CSMA/CA and a huge overhead. Thus, the method according to an embodiment of the present invention is able to allow using the reuse process even for very short traffic duration.

In a specific implementation according to an embodiment of the invention, 24 APs (devices 200/210) are included in a wireless system. Particularly, 6 APs in all 24 APs are participated in a reuse network, wherein 4 APs have 2mSec Tx durations and other 2 APs have 0.5mSec Tx durations. Assuming all APs have constant traffic and durations, and there is no additional reuse overhead, according to the embodiment of the invention, an average time of transmission is calculated as: Average time of transmission = (DCF Overhead + 2)). However, in a conventional method, the average time of transmission is calculated as:

Average time of transmission = (30% * (DCF Overhead + 0.5 + DCF Overhead + 1.5)) + (70% * (DCF Overhead + 2)).

Considering 4 networks (each including 24 APs in the network and 6 AP in reuse network) with similar behavior, and a DCF overhead > 2 ms, the average time of transmission according to a conventional method is equals to 30% *(2 + 0.5 + 2 + 1.5) + 70% * (2 + 1.5) = 4.25mSec. By contrast, the average time of transmission according to an embodiment of the invention will be (2 + 1.5) = 3.5 ms. A Gain of 21.5%, i.e. (4.25/3.5) - 100%, can be achieved.

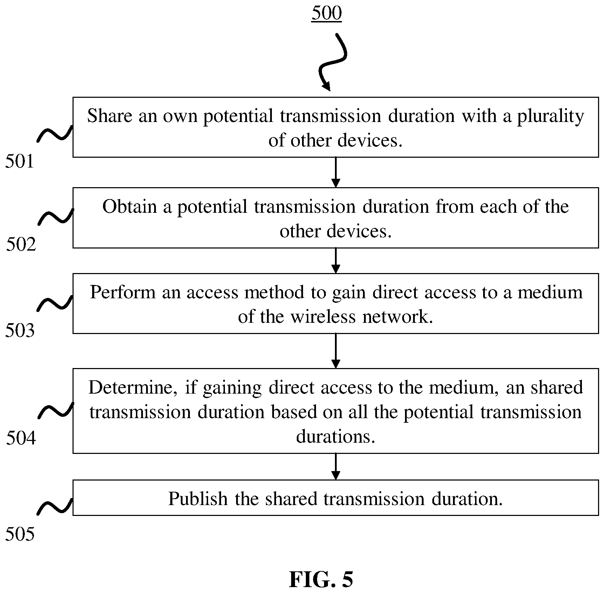

FIG. 5 shows a method 500 performed by a device 200 for a wireless network, according to an embodiment of the present invention. In particular, the device 200 is the device 200 of FIG. 2. The method 500 comprises: a step 501 of sharing an own potential transmission duration 201 with a plurality of other devices 210; a step 502 of obtaining a potential transmission duration 202 from each of the other devices 210; a step 503 of performing an access method to gain direct access to a medium of the wireless network; a step 504 of determining, if gaining direct access to the medium, an shared transmission duration 203 based on all the potential transmission durations 202; and a step 505 of publishing the shared transmission duration 203. Particularly, the other devices 210 are the other devices 210 of FIG. 2.

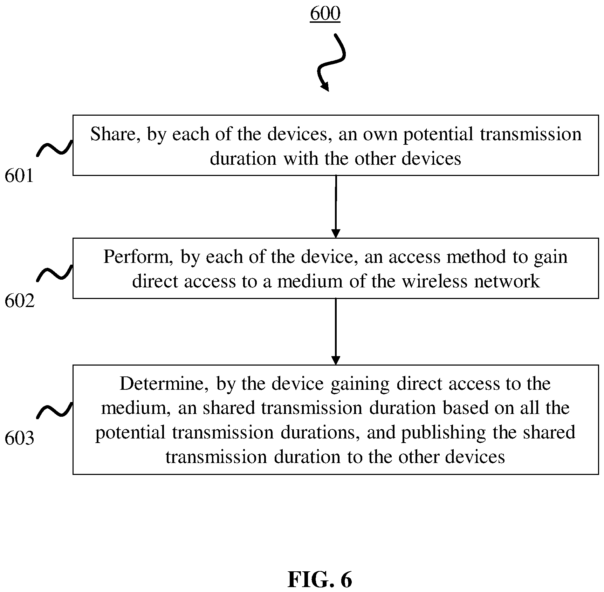

FIG. 6 shows a method 600 performed by a system of a plurality of devices 200 and 210 for a wireless network, according to an embodiment of the present invention. In particular, the device 200 is the device 200 of FIG. 2, and the other devices 210 are the other devices 210 of FIG. 2. The method 600 comprises: a step 601 of sharing, by each of the devices 200 and 210, an own potential transmission duration 201 with the other devices 200 and 210; a step 602 of performing, by each of the devices 200 and 210, an access method to gain direct access to a medium of the wireless network; and a step 603 of determining, by the device 200 or 210 gaining direct access to the medium, an shared transmission duration 203 based on all the potential transmission durations 202, and publishing the shared transmission duration 203 to the other devices 200 and 210.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

In addition, the benefits of the invention can be summarized as:

- enable collaboration between Tx devices in a way that provide a better use of the medium,

- simple to implement with small SW modifications (share data information),

- work with exiting reuse methods and with potential improvements method that can come in the future,

- backward compatible,

- provide gain to an existed feature, and

provided gain of ~30% in overall network performance.

**Claims**

1. A method (600) for a wireless network, wherein the method comprises:

   obtaining, by a device (200), one or more potential transmission durations (202) from a plurality of the other devices (210);
   determining, by the device (200), a shared transmission duration (203) based on the one or more potential transmission durations (202) and an own potential transmission duration (201) of the device (200), if the device (200) gains access a medium of wireless network;
   publish the shared transmission duration (203), wherein the device (200) and the other devices (210) share the shared transmission duration (203).

2. The method (600) according to claim 1, wherein the determining, by the device (200), a shared transmission duration (203) based on the one or more potential transmission durations (202) and an own potential transmission duration (201) of the device (200), comprises:
   determining, by the device (200), the shared transmission duration (203) based on an average duration of the one or more potential transmission durations (202) and an own potential transmission duration (201) of the device (200).

3. The method (600) according to claim 2, wherein the determining, by the device (200), a shared transmission duration (203) based on the one or more potential transmission durations (202) and an own potential transmission duration (201) of the device (200), comprises:
determining, by the device (200), the shared transmission duration (203) according to the shorter one of the average duration and a determined maximum duration.

4. The method (600) according to one of the claims 1 to 3, wherein the method (200) further comprises:
providing, by the device (200), medium reuse information to the other devices (210).

5. The method (600) according to one of the claims 1 to 4, wherein the method (200) further comprises:
allowing, by the device (200), the other devices (210) to reuse the medium during the shared transmission duration (203), if the own potential transmission duration (202) is zero.

6. The method (600) according to one of the claims 1 to 5, wherein the method (200) further comprises:
selecting, by the device (200), an own transmission duration based on the own potential transmission duration (202) and the shared transmission duration (203).

7. The method (600) according to one of the claims 1 to 5, wherein the method (200) further comprises:
selecting, by the device (200), an own transmission duration according to the longer one of the own potential transmission duration (202) and the shared transmission duration (203).

8. The method (600) according to claim 6 or 7, wherein the method (200) further comprises:
reducing, by the device (200), a transmission power and/or a throughput rate for transmitting data, if the shared transmission duration (203) is longer than the own transmission duration.

9. The method (600) according to one of the claims 6 to 8, wherein the method (200) further comprises:

transmitting, by the device (200), data during the own transmission duration, and
transmitting, by the device (200), NULL data during the remaining time of the shared transmission duration (203), if the shared transmission duration (203) is longer than the own transmission duration.

10. A device (200), wherein the device (200) performs the method (600) according to any one of claims 1 to 9.

11. A computer-readable storage medium, wherein the storage medium stores a computer program or instructions, and when the computer program or the instructions are executed, the method according to any one of claims 1 to 9.

12. A computer program, wherein the computer program comprises instructions used to implement the method according to any one of claims 1 to 9.

**FIG. 1**

**FIG. 2**

AC

AP

Distribute
Current AP Info

Get AP
Information

AP List including Tx Duration

**FIG. 3**

FIG. 4

500

Share an own potential transmission duration with a plurality of other devices.

501

Obtain a potential transmission duration from each of the other devices.

502

Perform an access method to gain direct access to a medium of the wireless network.

503

Determine, if gaining direct access to the medium, an shared transmission duration based on all the potential transmission durations.

504

Publish the shared transmission duration.

505

**FIG. 5**

<u>600</u>

| | Share, by each of the devices, an own potential transmission duration with the other devices |
|---|---|

601

| | Perform, by each of the device, an access method to gain direct access to a medium of the wireless network |
|---|---|

602

| | Determine, by the device gaining direct access to the medium, an shared transmission duration based on all the potential transmission durations, and publishing the shared transmission duration to the other devices |
|---|---|

603

**FIG. 6**